# EUROPÄISCHE PATENTSCHRIFT

(11) **EP 1 243 535 B1**
(45) Veröffentlichungstag und Bekanntmachung des Hinweises auf die Patenterteilung: **30.11.2005**
(21) Anmeldenummer: 01107137.0
(22) Anmeldetag: 22.03.2001
(51) Int. Cl.: B65G 65/44, B65D 88/66, B65D 90/62, B65D 90/66, B65G 47/19, G01G 13/02

(54) **Auslassvorrichtung**
Discharging means
Dispositif de déchargement

(43) Veröffentlichungstag der Anmeldung: 25.09.2002
(73) Patentinhaber: montena SA, 1753 Matran (CH)
(72) Erfinder: Nussbaumer, Arthur, 3186 Düdingen (CH)
(74) Vertreter: Révy von Belvárd, Peter

(56) Entgegenhaltungen:
- EP-A- 0 272 610
- EP-A- 0 644 136
- WO-A-90/08724
- DE-A- 2 923 444
- US-A- 4 691 843
- US-A- 5 957 331

## Beschreibung

Die Erfindung bezieht sich auf eine Auslassvorrichtung nach dem Oberbegriff des Anspruches 1. Eine solche Auslassvorrichtung ist beispielsweise aus der WO-A-9008724 bekannt geworden.

Mit einer solchen Vorrichtung lässt sich das, meist heikle, Schüttgut, wie Vitamine, oder gefährliche Stäube, recht gut aus dem Aufnahmebereich in einen Behälter dosieren. Der Begriff "Aufnahmebereich" ist hier im weitesten Sinne zu verstehen und kann Transportbehälter, Silos, Förderleitungen, Mischer, Reaktoren oder Prozess- bzw. Reaktionszonen etc. umfassen. Daher soll auch der später verwendete Begriff "Füllungs- oder Konzentrationsgrad" in einem entsprechend weitem Sinne verstanden werden.

Allerdings werden die Anforderungen an die Dosiergenauigkeit immer höher. Mit der bekannten Einrichtung liess sich ja - gemessen an heutigen Anforderungen - nur grob dosieren. Insbesondere auch deshalb, weil die Fliesseigenschaften des Schüttgutes auch von der Füllhöhe im Aufnahmebereich abhängig ist und sich daher mit der Zeit ändern kann.

Nun ist es etwa aus der DE-A-29 23 444, der WO 90/08724 oder der US-A-4,691,843 bekannt, die Höhe des Verschlussorganes jeweils einstellbar zu machen. Allerdings sind alle diese bekannten Konstruktionen so beschaffen, dass jeweils ein Monteur ins Innere des Silos oder Behälters gelangen muss, um dort eine Verstellung vorzunehmen. Dies kann er natürlich nicht während Schüttgut aus dem Behälter ausgelassen wird. Vielmehr muss der Betrieb abgebrochen und die Vorrichtung so weit zerlegt werden, dass der Monteur ins Innere gelangen kann. Somit kann das Einstellen des Positionssensors nur sehr grob und schätzungsweise vorgenommen werden, wobei sich dann während des Ausfliessens des Schüttgutes erst ergibt, ob die Einstellung richtig ist oder nicht. Dazu kommt, dass Schüttgut in einem Behälter gegebenenfalls (z.B. je nachdem, ob es schon lange darin lagert oder erst jüngst nachgefüllt wurde) recht unterschiedliche Konsistenz haben kann. Das mag dazu führen, dass die gewählte Einstellung des Positionsgebers beim Auslassen des Schüttgutes zunächst richtig ist, sich dann aber im einen oder anderen Sinne verändert. Ein Nachstellen ist aber dann mit der bekannten Konstruktion nicht mehr möglich. Die erfindungsgemässe Ausbildung kann aber bei einer Vertikalanordnung nach der EP-A-0 915 032 auch dazu benutzt werden, durch relativ rasches Heben und Senken der Grob-Betätigungseinrichtung den Effekt eines Vibrators, nämlich eine Anregung des Schüttgutes zum Rieseln, herbeizuführen, so dass ein Vibrator nicht mehr länger nötig ist. Dies kann natürlich auch von der Steuereinrichtung automatisch erfolgen, die aber gewünschtenfalls auch den Vibrator (oder die als Vibrator wirkende Betätigungseinrichtung) steuert.

Die oben besprochene manuelle Steuerung kann aber nach Art einer Regelung ausgestaltet sein, wenn die Merkmale des Anspruches 2 vorgesehen werden.

Es versteht sich, dass es nach einem älteren Stand der Technik, wie etwa der EP-A-0 049 992, durchaus möglich ist, lediglich eine einzige Betätigungseinrichtung vorzusehen und dieser die Steuereinrichtung zuzuordnen. Es ist jedoch - ebenso wie in der genannten EP-A- 0 915 032 - bevorzugt, im Sinne des Anspruches 4 eine eigentliche Betätigungseinrichtung, oder Grob-Betätigungseinrichtung, und eine Hubhöhenverstellung, oder Fein-Betätigungseinrichtung, vorzusehen. Wohl wäre es denkbar, die Steuereinrichtung auf beide Betätigungseinrichtungen wirken zu lassen, etwa im Sinne einer Kaskadenregelung, wobei die Fein-Betätigungseinrichtung bis zu einer Extremlage gesteuert, und dann die Grob-Betätigungseinrichtung zur Einstellung der Öffnungsgrösse herangezogen wird (oder umgekehrt, erst die Grob-Betätigungseinrichtung eine vorbestimmte Änderung der Öffnungsgrösse vornimmt und dann die Fein-Betätigungseinrichtung). Besonders bevorzugt ist es jedoch, die Grob-Betätigungseinrichtung nur eine bestimmte Öffnungsbewegung ausführen zu lassen und die Dosierung mit Hilfe der Fein-Betätigungseinrichtung vorzunehmen.

Weitere Einzelheiten der Erfindung ergeben sich an Hand der nachfolgenden Beschreibung von in der Zeichnung schematisch dargestellten Ausführungsbeispielen. Es zeigen:
- Fig. 1: eine Ausführungsform nach dem Stande der Technik mit einer einzigen gesteuerten Betätigungseinrichtung und einer Waage zur Bestimmung des Füllungsgrades, wogegen
- Fig. 2: eine erste erfindungsgemässe Ausführungsform darstellt, mit einer eigentlichen Betätigungseinrichtung und einer Fein-Betätigung dienenden Hubhöhenverstellung, wovon die letztere der Steuerung unterliegt, die hier eine volumetrische ist.

Schüttgutes zum Rieseln, herbeizuführen, so dass ein Vibrator nicht mehr länger nötig ist. Dies kann natürlich auch von der Steuereinrichtung automatisch erfolgen, die aber gewünschtenfalls auch den Vibrator (oder die als Vibrator wirkende Betätigungseinrichtung) steuert.

Die oben besprochene manuelle Steuerung kann aber nach Art einer Regelung ausgestaltet sein, wenn die Merkmale des Anspruches 2 vorgesehen werden.

Weitere Einzelheiten der Erfindung ergeben sich an Hand der nachfolgenden Beschreibung von in der Zeichnung schematisch dargestellten Ausführungsbeispielen. Es zeigen:

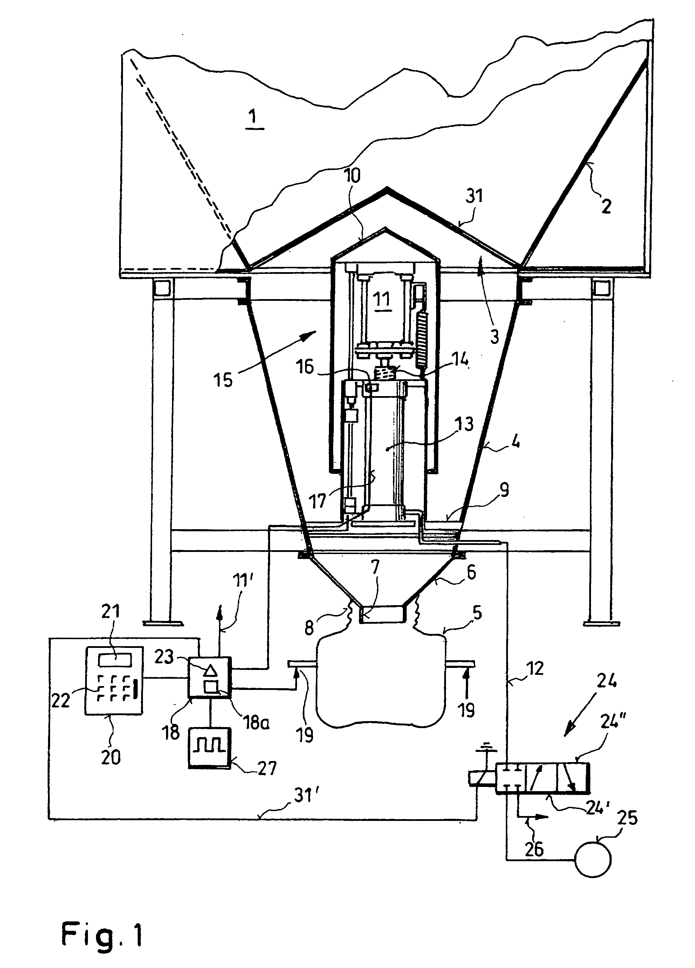

- Fig. 1: eine Ausführungsform mit einer einzigen gesteuerten Grob-Betätigungseinrichtung, wie sie auch der Stand der Technik besitzt, und einer Waage zur Bestimmung des Füllungsgrades, an welcher die Erfindung im Sinne der

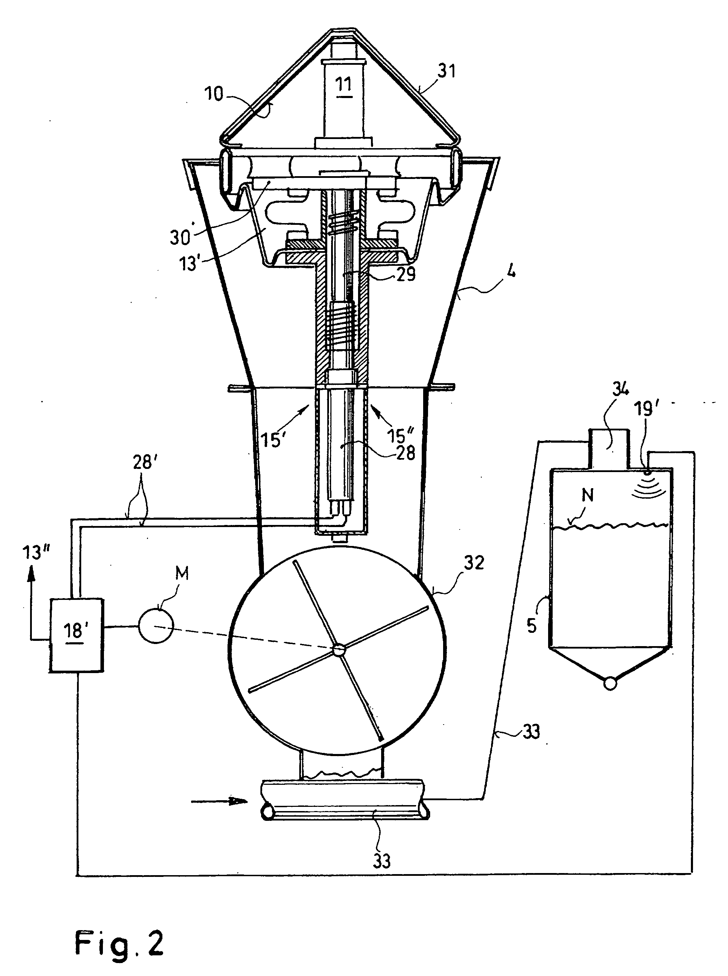

- Fig. 2: mit eine Grob-Betätigungseinrichtung und eine Fein-Betätigung aufweisenden Hubhöhenverstellung zur Anwendung kommt, wovon die Hubhöhenverstellung der Steuerung unterliegt, die hier eine volumetrische ist.

Gemäss Fig. 1 soll aus einem Silo oder einem anderen Aufnahmebereich für Schüttgut dasselbe über einen Auslasstrichter 2 durch eine Öffnung 3 am unteren Ende des Silos 1 in einen trichterförmigen Förderabschnitt 4 und an daran angedockten Behälter 5 umgefüllt werden. Die Grössenverhältnisse von Silo 1 und Behälter 5 sind hier grob schematisch wiedergegeben, d.h. der hier recht gross dargestellte Silo oder Abgabebehälter 1 kann im Verhältnis zum Behälter 5 kleiner und letzterer wiederum grösser sein, als dies in Fig. 1 dargestellt ist. Auch ist die Art der Andockung für die vorliegende Erfindung kaum von Bedeutung. In Fig. 1 besitzt der Förderabschnitt 4 noch einen Auslauftrichter 6 mit einem am Ende anschliessenden Zylinderabschnitt 7, auf den die Einfüllöffnung des Behälters 5 aufgeschoben und, beispielsweise, durch einen Balg 8 abgedichtet ist. Andockvorrichtungen mit den entsprechenden Dichtungen sind in der einschlägigen Technik schon in der verschiedensten Art vorgeschlagen worden, so dass der Fachmann unter einem weiten Feld von Lösungen auswählen kann. Wie schon eingangs erwähnt, ist der Behälter 5 lediglich ein Beispiel für eine mögliche Vielfalt von zweiten Aufnahmebereichen, beispielsweise verschiedenen Reaktionszonen eines einzigen Reaktors oder auch eines über eine entsoprechende Verbindung befüllten Mischers.

Die Öffnung 3 ist in bekannter Weise durch einen Konus 31 verschlossen. Dies bedeutet nicht, dass die Erfindung auf diese Art von Verschlussorganen eingeschränkt wäre, obwohl sie in dieser Art bevorzugt sind. Möglich wären aber auch Drehschieber mit horizontaler oder vertikaler Achse, wie sie für den Verschluss von Silos und anderen Grossbehältem bereits vorgeschlagen worden sind.

An radialen Streben 9 ist im Förderabschnitt 4 eine Betätigungseinrichtung 15 für den Verschlusskonus 31 befestigt. Die Betätigungseinrichtung 15 umfasst einen sich im ausgefahrenen Zustand an den Verschlusskonus 15 von unten her anlegenden und in weiterer Folge den Konus 31 anhebenden Betätigungskegel 10, so dass sich im völlig ausgefahrenen Zustand des Betätigungskegels 10 rund um den Rand des Konus 31 und aussen durch den Auslasstrichter 2 begrenzt ein eine Auslassöffnung bestimmter Grösse bildender Ringspalt ergibt. Durch diesen Ringspalt rieselt Schüttgut über den Förderabschnitt 4 in den Auslauftrichter 6 und von da in den zu füllenden Behälter 5.

Um dieses Umfüllen zu unterstützen, ist vielfach (aber nicht immer) unterhalb des Betätigungskegels 10 ein einen Teil der Betätigungseinrichtung 15 bildender Vibrator 11 angeschlossen, der beispielsweise pneumatisch betätigbar ist. Die Zuleitung der entsprechenden Betätigungsluft kann über die dargestellte pneumatische Leitung 12 oder eine gesonderte Leitung erfolgen.

Denn diese Leitung 12 ist, wie dargestellt, an einen Betätigungszylinder 13, dessen Kolbenstange 14 oben mit dem Betätigungskegel 10 bzw. dem Vibrator 11 verbunden ist. Die Einzelheiten dieser Verbindung sind an sich bekannter Natur und sollen daher hier nicht besonders erörtert werden. Es sei aber erwähnt, dass die Kolbenstange 14 mit einem am Zylinder 13 befestigten magnetischen Sensor 16 zusammenwirkt. Wie strichliert angedeutet, ist die Kolbenstange 14 unter einem darübergeschobenen Rohr mit einem Gewinde versehen, welches entsprechend der US-A-3,956,973 eine magnetische Diskontinuität darstellt. Verschiebt sich also die Kolbenstange 14 ausgehend von der der Geschlossenstellung des Konus 31 entsprechenden Ausgangslage nach oben, so bewirkt jede dieser Diskontinuitäten die Abgabe eines Impulses vom Sensor 16 an eine Leitung 17, so dass durch Abzählen der Impulse die Position der Kolbenstange 14 jederzeit festgestellt werden kann. Da über die Kolbenstange letztlich auch der Konus 31 angehoben wird, lässt sich auf diese Weise auch die Position des Konus 31 und damit wiederum die Grösse der ringspaltförmigen Öffnung zwischen diesem Konus 31 und dem Auslasstrichter 2 bestimmen.

Das Abzählen der Impulse, d.h. die Ermittlung der Position des Konus 31 bzw. der Grösse der gegebenen ringspaltförmigen Öffnung zwischen dem Rande des Konus 31 und dem Auslasstrichter 2, erfolgt mit Hilfe einer Steuereinrichtung oder Prozessor 18, vorzugsweise einem Mikroprozessor, der gleichzeitig vom Behälter 5 auch eine Information über dessen, hier gravimetrischen, Füllungsgrad erhält. Dazu ist der Behälter 5 im vorliegenden Ausführungsbeispiel nach Fig. 1 als Wiegebehälter ausgeführt, d.h. er liegt auf schematisch angedeuteten Kraftmessdosen 19 oder ähnlichen Sensoren zur Gewichtsbestimmung auf. Diese Sensoren 19 geben an den Prozessor 18 eine Information über den tatsächlichen Füllungsgrad des Behälters 5. Im Falle der Konzentrationsmessung in einem, beispielsweise chemischen, Prozess können natürlich die verschiedensten Sensoren zur Bestimmung der Konzentration, wie Viskositätsmesser, pH-Sonden, Trübungsmesser, Spektrometer, Gasmesser (wie CO₂-Messer, Sauerstoff-Messgeräte etc.) usw. angewandt werden. Im Falle eines Mischers als zweiten Aufnahmebereich könnte beispielsweise die Schüttgutkonzenztration in einer Mischung durch die Stromaufnahme des Mischermotors bestimmt werden. Oder im Falle der Zugabe von elektrisch leitendem Schüttgut, wie Graphit- oder Metallstaub, durch Bestimmung der Leitfähigkeit einer Mischung.

Auf diese Weise kann der Behälter 5 als Prämix-Behälter ausgebildet werden, der einzelne miteinander zu vermischende Komponenten aus verschiedenen Behältern 1 in einer jeweils gewünschten Menge entnimmt. Über die Waage 19 wird das jeweilige Ankunftsgewicht des Behälters 5 festgestellt und dann die gewünschte Menge an Schüttgut aus dem jeweils nächsten Silo, an das der Behälter 5 angedockt ist, hinzugefügt. Natürlich ist es möglich, die Information über die tatsächliche Position des Konus 31 über die Leitung 17 wegzulassen, denn es mag genügen, aus den Signalen der Sensoren 19 zu wissen, dass der Behälter 5 noch nicht die notwendige Menge an Schüttgut erhalten hat.

Es sei hier erwähnt, dass an Stelle der oben geschilderten Bestimmung der Gewichtszunahme des Behälters 5 auch alternativ oder zusätzlich die Gewichtsabnahme des Inhaltes des Silos 1 (oder eines anderen ersten Aufnahmebereichs) bestimmt werden kann.

Um dies zu automatisieren, ist an den Prozessor 18 vorzugsweise ein Schaltpult 20 angeschlossen, welches einerseits die Füllmenge im Behälter 5 an einem Display 21 anzeigt, anderseits vorzugsweise mit einem Eingabe-Tastenfeld 22 versehen ist, um die gewünschte Schüttgutmenge bzw. den gewünschten Füllungsgrad im Behälter 5 voreinzustellen, wobei der Prozessor 18 eine Vergleichsstufe 23 zum Vergleichen einer vom tatsächlichen Füllungsgrad im Behälter 5 abhängigen Grösse mit dem eingestellten gewünschten Füllungsgrad aufweist. Es kann aber auch ein Vergleich des Füllungsgrades mit der Position des Konus 31 stattfinden, d.h. wenn der Füllungsgrad unbefriedigend ist und die Position des Konus noch ein weiteres Öffnen erlaubt, so wird der Ringspalt zwischen Rand des Konus 31 und dem Auslasstrichters vergrössert. Anderseits kann der Prozessor 18 auch eine weitere Ausgangsleitung 11' zum Vibrator 11 besitzen, um in einem solchen Fall das Ausfliessen von Schüttgut aus dem Silo 1 durch Vibration anzuregen.

Das Verstellen des Konus 31 erfolgt über eine Signalleitung 31', welche ein Ventil 24 betätigt. In der dargestellten Geschlossenstellung des Konus 31 ist der Weg von einer Druckluftquelle 25 in die Pneumatikleitung 12 unterbrochen. In einer Position 24' des Ventiles 24 ist die Druckluftquelle 25 mit der Pneumatikleitung 12 verbunden und liefert so lange Druckluft an den Zylinder 13, bis der Sensor 16 das Erreichen einer von der Steuerung 18 vorgegebenen Position anzeigt. Dann schliesst das Ventil 24 wiederum und blockiert somit auch den Abfluss aus der Leitung 12, d.h. die jeweilige Stellung der Kolbenstange 14 ist fixiert.

Will man dagegen den Konus wieder absenken, so wird das Ventil 24 in die Position 24" geschaltet, in der die Pneumatikleitung 12 mit einer Abluftleitung 26 verbunden wird. Es versteht sich, dass die Ausgangsleitung 11' des Prozessors 18 in ähnlicher Weise geschaltet ist, und dass entweder die Leitung 11' zum Steuern des zur Betätigungseinrichtung 15 gehörenden Vibrators 11 oder die Leitung 31' oder auch beide vorgesehen werden können. Auch versteht es sich, dass an Stelle eines zentral an der Längsachse der Betätigungseinrichtung 15 angeordneten Vibrators 11 auch ein am Gehäuse des Silos 1 oder an einer anderen Stelle vorgesehener Vibrator vorgesehen sein könnte. Alternativ wird an Stelle des Vibrators 11 zum Auflockern des Schüttgutes im Silo 1 Luft über Düsen in dessen Innenraum gelassen, wie dies im Stande der Technik vorbeschrieben ist. Auch die Betätigung dieser Luftdüsen kann, alternativ oder kumulativ mit der eben geschilderten Steuerung, über den Prozessor 18 erfolgen. Insofern ist also der Begriff "Betätigungseinrichtung" im weitesten Sinne als jede Betätigungseinrichtung zu verstehen, welche das Ausfliessen des Schüttgutes aus dem Aufnahmebereich 1 ermöglicht bzw. erleichtert.

Die Anordnung mindestens zweier Ausgangsleitungen 11' und 31' des Prozessors 18 macht aber auch eine Kaskaden- oder Sequenzregelung bzw. -steuerung möglich. Dabei wird beispielsweise der Konus 31 in eine seiner Offenstellungen gebracht; erhöht sich dann aber der Füllungsgrad des Behälters nicht genügend, so wird über die Leitung 11' der Vibrator betätigt. Nützt dies noch zu wenig, kann das Programm so ausgestaltet werden, dass dann der Konus 31 weiter geöffnet wird, worauf dasselbe Spiel erfolgen kann. Selbstverständlich kann dieses Programm auch variiert werden, indem bei ungenügendem Schüttgutfluss zuerst der Konus weiter geöffnet und erst dann nötigenfalls der Vibrator (oder eine andere Lockerungseinrichtung, wie oben besprochen) eingesetzt wird. Dennoch kann eine Lockerung des Schüttgutes erfindungsgemäss ohne Vibrator 11 erfolgen, indem etwa die Steuerung 18 dazu benützt wird, dem Konus über den Zylinder 13 eine Vibrationsbewegung aufzuprägen. Es versteht sich, dass das Programm einer solchen Sequenz in einem Programmspeicher enthalten sein muss, der beispielsweise in Form eines Speichers 18a in den Prozessor 18 eingebaut ist, bevorzugt aber von diesem lösbar ist, um gewünschtenfalls das Programm wechseln und den Bedürfnissen anpassen zu können. Es wäre beispielsweise, insbesondere für kleine zu dosierende Mengen, denkbar, den Konus 31 an sich geschlossen zu lassen und nur über den Motor 28 leicht anzuheben, wobei es zweckmässig sein kann, entweder einen Positionsgeber, ähnlich dem Positionsgeber 16 nach Fig. 1, für die Stellung des Konus 31 oder der Spindel 29 vorzusehen. Dazu wiederum kann die Spindel mit einem, z.B. optischen, magnetischen, kapazitiven oder induktiven, Winkelgeber verbunden sein, oder der Motor 28 ist als Schrittmotor ausgebildet, dessen Umdrehungsschritte abzählbar sind.

Eine weitere Möglichkeit ist die folgende: Das Befüllen des Behälters soll ja in möglichst zeitsparender Weise erfolgen. An Hand der Fig. 2 wird ein Mittel gezeigt, wie die Befüllung beschleunigt werden kann. In Fig. 1 aber ist ja zunächst davon auszugehen, dass ein Prozessor 18 sowieso einen Taktgenerator 27 zum Bestimmen der Abläufe des Programmes benötigt. Dieser Taktgenerator 27 kann aber gleich auch als Zeitgeber dienen, welcher die Veränderung des Füllungsgrades des Behälters 5 pro Zeiteinheit bestimmt (also die erste Ableitung des Füllungsgrades nach der Zeit, d.h. die Steuerung 18 muss zum Differenzieren ausgebildet sein). Es kann dann die oben beschriebene Steuerung in Abhängigkeit der Befüllungsgeschwindigkeit, also des Füllungsgrades pro Zeiteinheit erfolgen. Es versteht sich, dass an Stelle eines mit einem Taktgenerator 27 versehenen Prozessors 18 auch jede andere Steuerung verwendbar ist, der dann eben der Taktgenerator 27 als Zeitgeber zugeordnet wird.

Es wurde oben bereits auf die Fig. 2 Bezug genommen. In dieser umfasst eine Betätigungseinheit 15' zwei unterschiedliche Betätigungseinrichtungen, von welchen die eine eine Grob-Betätigungseinrichtung in Form eines bekannten Hubbbalges 13', die andere eine Fein-Betätigungseinrichtung 15" darstellt, die beispielsweise in der Art ausgebildet ist, wie es in der EP-A-0 915 032 beschrieben ist. Diese kann dazu benützt werden, die Befüllungszeit dadurch zu reduzieren, indem der Konus 31 erst maximal mit Hilfe des Hubbalges 13' gehoben wird, so dass das Schüttgut mit grosser Geschwindigkeit herunter, beispielsweise in den Behälter 5 nach Fig. 1, rieselt. Liegt dann der tatsächliche Füllungsgrad im Behälter 5 nahe dem SOLL-Befüllungsgrad, welcher mittels des Tastenfeldes 22 eingestellt worden ist, so kann ein Motor 28 (sei es ein elektrischer Motor oder ein pneumatischer Drehmotor) gedreht werden, um eine Gewindespindel 29 so zu verstellen, dass die Öffnung des über der Anordnung der Fig. 2 in der in der Fig. 1 gezeigten Weise gelegenen Silos 1 verkleinert wird, so dass die Dosierung auf höchst präzise Art erfolgt.

Auch hier is eine Sequenzsteuerung möglich. Es kann bei Überschreiten eines ersten Schwellwertes durch den Füllungsgrad erst einmal der Konus 31 mittels des Hubbalges 13' abgesenkt und damit die ringspaltförmige Öffnung des Silos verkleinert wenden. Gleichzeitig mag der Motor 28 die Gewindespindel 29 so drehen, dass die mit deren Gewinde in Eingriff stehende Trägerplatte 30 mit dem Kegel 10 auf einen relativen Höchststand gelangt. Erst bei einem weiteren Schwellwert wird beispielsweise der Balg 13' derart abgesenkt, dass der Konus 31 bereits schliessen würde, wäre nicht die Gewindespindel so gedreht, dass noch ein geringer Ringspalt zum Durchrieseln von Schüttgut offen bleibt, bis die Spindel 29 bei Erreichen des SOLL-Füllungsgrades im Sinne eines vollständigen Absenkens des Konus 31 gedreht wird.

Es versteht sich, dass die in Fig. 2 gezeigte Ausgangsleitung 28' rein schematisch dargestellt ist; denn im Falle eines pneumatischen Motors 28 wird auch hier wiederum ein Ventil, im Falle eines elektrischen Motors gegebenenfalls eine elektrische Motoransteuerstufe in die Leitung 28' zwischengeschaltet sein.

Fig. 2 zeigt aber auch, dass die Erfindung durchaus auch auf eine Steuerung des volumetrischen Füllungsgrades angewandt werden kann. Zu diesem Zweck kann an den Förderabschnitt 4 eine Zellenradschleuse 32 angeschlossen sein, welche mittels eines Motors M antreibbar ist. Der Füllungsgrad der einzelnen Zellen des Zellenrades 32 hängt natürlich auch davon ab, ob genügend Schüttgut über die vom Konus 31 verschlossene Öffnung (3 in Fig. 1) herausfliesst. Wenn es möglich ist, den Zellenfüllungsgrad zu bestimmen, so kann ein entsprechendes Signal an den Prozessor 18' abgegeben werden. Da dies aber unter Umständen schwierig oder ungenau ist, kann man, wie folgt, vorgehen.

Der Zellenradschleuse 32 ist eine pneumatische Förderleitung 33, beispielsweise mit Flugförderung, gegebenenfalls aber auch mit Pfropfenförderung (Langsamförderung) nachgeschaltet. Diese Leitung führt zu einem zu füllenden Behälter 5', der mit einem Abscheider 34, beispielsweise in Form eines Zyklons, in Verbindung steht. Innerhalb des Behälter 5' wird sich also mit der Zeit ein gewisses Niveau N an Schüttgut einstellen. Dieses Niveau N kann durch einen Füllstandsmesser 19', beispielsweise in Form eines Ultraschall-Entfernungsmessers oder jedes anderen an sich bekannten Füllstandsmessers, abgefragt und dem Prozessor 18' mitgeteilt werden, der dann in der oben bereits geschilderten Weise entweder über eine den Balg 13' steuernde Ausgangsleitung 13", über die die Fein-Betätigungseinrichtung 28, 29 steuernde Leitung 28' und/oder über eine - hier zur Vereinfachung der Darstellung - nicht dargestellte Leitung 11' die Lockerungseinrichtung (Vibrator 11) betätigt.

Es ist durchaus nicht nötig, eine Zellenradschleuse 32 vorzusehen. Wird nämlich die Förderleitung 33 aus Saugförderleitung ausgebildet, so kann sie bei geöffnetem Konus 31 Schüttgut unmittelbar aus dem sich rund um den Konus 31 ergebenden Ringspalt saugen. Ebenso ist es möglich, den Behälter 1 als Druckbehälter auszubilden, der das Schüttgut unter Druckbelastung aus dem Ringspalt auspresst. Auch Kombinationen beider Verfahren sind möglich. Falls aber eine Schleuse zwischengeschaltet ist, braucht dies nicht eine Drehschleuse zu sein, sondern kann jeglicher an sich bekannter Art sein.

Wie ersichtlich, kann die Zellenradschleuse 32 bzw. ihr Motor M ebenfalls an den Prozessor 18' angeschlossen sein, um diesem eine Information über die Drehgeschwindigkeit und/oder die Anzahl der Drehungen (die dann eine Information über das geförderte Volumen gibt) mitzuteilen. Es ist dabei auch denkbar, dass die Zellenradschleuse 32 vom Prozessor 18' derart gesteuert wird, dass sie zuerst einen grossen Volumenstrom an Schüttgut zum Behälter 5' fördert und erst bei Annäherung an den SOLL-Füllungsgrad in demselben zu einer langsameren Drehung gebracht wird.

Es ist ersichtlich, dass die Erfindung somit in zahlreichen verschiedenen Ausführungsvarianten realisiert werden kann, die nicht auf die gezeigten beiden beschränkt ist. Vor allem ist es möglich, einzelne Komponenten der gezeigten Ausführungsbeispiele miteinander zu kombinieren, etwa auch im Falle der Fig. 2 eine gravimetrische Dosierung mittels Waage 18 statt der volumetrischen Dosierung vorzusehen und umgekehrt. Auch können Einzelheiten der Steuerung der einen Figur auf die Konstruktion der anderen Figur angewandt werden. So kann die Betätigung mittels Motoren, Zylindern oder Balgen erfolgen, und es können auch die Verschliessorgane verschieden ausgeführt sein. Manche Schüttgüter, wie etwa Metallstäube, lassen sich sogar erst durch leichtes Verdichten (z.B. über einen an entsprechender Stelle angebrachten Vibrator) zu besserem Rieseln anregen.

## Patentansprüche

1. Auslassvorrichtung zum dosierbaren Auslassen von Schüttgut aus der Öff-nung (3) eines ersten Aufnahmebereiches (1), mit einem Verschliessorgan (31) und einem an die Öffnung (3) anschliessenden Förderabschnitt (4), durch den das Schüttgut bei geöffnetem Verschliessorgan (31) strömt, sowie mindestens einer in diesem Förderabschnitt (4) gelagerten Betätigungsvorrichtung (15), durch welche das Verschliessorgan (31) aus einer Geschlossenstellung in mindestens eine Offenstellung bzw. das Schüttgut zum Rieseln durch die Öffnung (3) hindurch bringbar ist, wobei die Betätigungsvorrichtung (15) folgende Einrichtungen umfasst:
a) neben einer Betätigungseinrichtung als Grob-Betätigungseinrichtung (13') für die Bewegung aus der Geschlossenstellung in die mindestens eine Offenstellung
b) einerseits eine Einrichtung (19; 19') zum Bestimmen des tatsächlichen Füllungs-oder Konzentrationsgrades eines an den Förderabschnitt (4) angeschlossenen zweiten Aufnahmebereiches, wie eines Behälters (5; 5', 32), wobei
c) mit dieser Einrichtung (19,19') eine Steuereinrichtung (18; 18') in Verbindung steht, welche
d) ab einem von der Einrichtung nach Merkmal b) bestimmten Schwellwert eine am selben Verschliessorgan (31) angreifende Fein-Betätigungseinrichtung (15") steuert, durch welche mehrere Offenstellungen unterschiedlicher Grösse des Verschliessorganes (31) bzw. für das Rieseln des Schüttgutes durch die Öffnung (3) hindurch einstellbar sind.

2. Auslassvorrichtung nach Anspruch 1, **dadurch gekennzeichnet, dass** an die Steuereinrichtung (18) eine Einstelleinrichtung (22) für einen gewünschten Füllungs- oder Konzentrationsgrad angeschlossen ist, wobei die Steuereinrichtung (18) vorzugsweise eine Vergleichsstufe (23) zum Vergleichen einer vom tatsächlichen Füllungs- oder Konzentrationsgrad abhängigen Grösse wenigstens mit dem eingestellten gewünschten Füllungs- oder Konzentrationsgrad aufweist.

3. Auslassvorrichtung nach Anspruch 1 oder 2, **dadurch gekennzeichnet, dass** die Einrichtung (19; 19') zum Bestimmen des tatsächlichen Füllungs- oder Konzentrationsgrades eine Wägeeinrichtung (19) umfasst.

4. Auslassvorrichtung nach einem der vorhergehenden Ansprüche, **dadurch gekennzeichnet, dass** die Steuereinrichtung (18) einen Zeitgeber (27) zum Bestimmen des Füllungs- oder Konzentrationsgrades pro Zeiteinheit aufweist.

5. Auslassvorrichtung nach einem der vorhergehenden Ansprüche, **dadurch gekennzeichnet, dass** die Fein-Betätigungseinrichtung (15") zum stufenlosen Verstellen der Öffnungsgrösse ausgebildet ist.

6. Auslassvorrichtung nach einem der vorhergehenden Ansprüche, **dadurch gekennzeichnet, dass** das Verschliessorgan (31) als heb- oder senkbarer Konus ausgebildet ist.

7. Auslassvorrichtung nach einem der vorhergehenden Ansprüche, **dadurch gekennzeichnet, dass** die Steuereinrichtung (18) einen Positionsgeber (16) für die Grösse der Öffnung (3) des Aufnahmebereiches (1) bzw. der Stellung des Verschliessorganes (31) aufweist.

8. Auslassvorrichtung nach einem der vorhergehenden Ansprüche, **dadurch gekennzeichnet, dass** die Steuereinrichtung (18) ein Sequenzsteuerungsprogramm in einem entsprechenden Programmspeicher (18a) aufweist, durch welchen unterschiedliche Einheiten (11, 13) der Betätigungseinrichtung (15) in einer Abfolge ansteuerbar sind.

9. Auslassvorrichtung nach einem der vorhergehenden Ansprüche, **dadurch gekennzeichnet, dass** die Betätigungseinrichtung (15) eine Lockerungseinrichtung für das Schüttgut, z.B. einen Vibrator (11), umfasst.

10. Verfahren zum Betreiben einer Auslassvorrichtung nach einem der vorherigen Ansprüche, **dadurch gekennzeichnet, dass** eine Sequenzsteuerung in dem Sinne durchgeführt wird dass nach einer Steuerung der Grob-Betätigungseinrichtung (13') im Sinne eines Absenkens des Verschliessorganes (31) so, dass dieses bereits schliessen würde, jedoch noch ein Spalt offen bleibt, die Fein-Betätigungseinrichtung (15", 29) im Sinne eines vollständigen Absenkens des Verschliessorganes (31) gesteuert wird.

## Claims

1. Discharging device for apportioned discharge of bulk material from the opening (3) of a first accommodation area (1), with a closing element (31) and a conveying section (4) adjacent the opening (3), through which flows the bulk material when the closing element (31) is opened, as well as at least one operating device (15) mounted in said conveying section (4) by means of which the closing element (31) is moved from a closed position into at least one open position or the bulk material is passed through by trickling through the opening (3), and the operating device (15) comprises the following devices:
a: alongside an operating device as coarse operating device (13') for movement from a closed position into the at least one open position;
b: on one side a device (19; 19') for determining the actual degree of filling or concentration of a second accommodation area which is connected to the conveying section (4), such as a container (5; 5', 32); and
c: to the device (19, 19') is linked a control device (18; 18') which
d: as of a threshold value, which is determined by the device according to feature b), controls a fine operating device (15") which engages the same closing element (31), by means of which a plurality of open positions of different size of the closing element (31) or trickling of the bulk material through the opening (3) can be set.

2. Discharging device according to Claim 1, **characterised in that** to the control device (18) is connected a setting device (22) for a desired degree of filling or concentration, and the control device (18) preferably comprises a comparative step (23) for comparing a value which is dependent on the actual degree of filling or concentration, at least to the set desired degree of filling or concentration.

3. Discharging device according to Claim 1 or 2, **characterised in that** the device (19; 19') includes a weighting mechanism (19) for determining the actual degree of filling or concentration.

4. Discharging device according to one of the above claims, **characterised in that** the control device includes a timer (27) for determining the degree of filling or concentration per time unit.

5. Discharging device according to one of the above claims, **characterised in that** the fine operating device (15") is designed for infinitely variable setting of the opening size.

6. Discharging device according to one of the above claims, **characterised in that** the closing element (31) is designed as an ascending or descending cone.

7. Discharging device according to one of the above claims, **characterised in that** the control device (18) comprises a positioning element (16) for the size of the opening (3) of the accommodation area (1) or the position of the closing element (31).

8. Discharging device according to one of the above claims, **characterised in that** the control device (18) comprises a sequence control program in a respective program memory (18a), by means of which different units (11, 13) of the operating device (15) can be controlled in a sequence.

9. Discharging device according to one of the above claims, **characterised in that** the operating device (15) includes a loosening device of the bulk material, for example a vibrator (11).

10. Method of operating a discharging device according to one of the above claims, **characterised in that** following a control of the coarse operating device (13') in a sense of lowering the shutting element (31) so that it would already be closed whilst keeping a gap open, the fine operating device (15", 29) is controlled in a sense of complete lowering of the closing element (31).

## Revendications

1. Dispositif de déchargement pour décharger de manière dosable du produit en vrac à travers d'une ouverture (3) d'une première zone de réception (1), comprenant un organe obturateur (31) et un segment de transport (4) raccordé à l'ouverture (3), par lequel le produit en vrac s'écoule, si l'organe obturateur (31) est ouvert, et étant logé dans ledit segment de transport (4) au moins un dispositif d'actionnement (15), par lequel l'organe obturateur (31) peut être déplacé d'une position fermée à au moins une position ouverte et le produit en vrac peut être causé de couler à travers ladite ouverture (3), le dispositif d'actionnement (15) comprenant les dispositifs suivants:
a) outre un dispositif d'actionnement comme dispositif d'actionnement primaire (13') pour le mouvement de la position fermée dans ladite au moins une position ouverte
b) d'une part un dispositif (19; 19') pour déterminer le degré actuel de remplissage ou de concentration dans une deuxième zone de réception attachée au segment de transport (4), comme un récipient (5; 5', 32), où
c) audit dispositif (19, 19') un dispositif de commande (18; 18') est connecté, qui
d) commande, dès un valeur de seuil déterminé par le dispositif selon la caractéristique b), un dispositif d'actionnement précis (15") agissant au même organe obturateur (31), par lequel plusieurs positions ouvertes de grandeur différente de l'organe obturateur (31) et pour l'écoulement du produit en vrac à travers l'ouverture (3) sont ajustables.

2. Dispositif de déchargement selon la revendication 1, **caractérisé en ce qu'**un dispositif d'ajustage (22) pour un degré de remplissage ou de concentration est connecté au dispositif de commande (18), ledit dispositif de commande (18) comprenant, de préférence, une étage de comparaison (23) pour comparer d'une donnée, qui dépend du degré de remplissage ou de concentration actuel, avec le degré souhaité ajusté de remplissage ou de concentration.

3. Dispositif de déchargement selon la revendication 1 ou 2, **caractérisé en ce que** le dispositif (19; 19') pour déterminer le degré actuel de remplissage ou de concentration comprend un dispositif de balance (19).

4. Dispositif de déchargement selon une quelconque des revendications précédentes, **caractérisé en ce que** le dispositif de commande (18) comprend une minuterie(27) pour déterminer le degré de remplissage ou de concentration par unité de temps.

5. Dispositif de déchargement selon une quelconque des revendications précédentes, **caractérisé en ce que** le dispositif d'actionnement précis (15") est formé pour régler la grandeur de l'ouverture d'une manière continue.

6. Dispositif de déchargement selon une quelconque des revendications précédentes, **caractérisé en ce que** l'organe obturateur (31) est formé comme cône montant et descendant.

7. Dispositif de déchargement selon une quelconque des revendications précédentes, **caractérisé en ce que** le dispositif de commande (18) comprend un transmetteur de position (16) pour la grandeur de l'ouverture (3) de la zone de réception 1 ou de la position de l'organe obturateur (31).

8. Dispositif de déchargement selon une quelconque des revendications précédentes, **caractérisé en ce que** le dispositif de commande (18) comprend un programme de gestion en séquence et un mémoire de programme (18a) correspondant, par lequel des unités différentes (11, 13) du dispositif d'actionnement (15) peuvent être commandées séquentiellement.

9. Dispositif de déchargement selon une quelconque des revendications précédentes, **caractérisé en ce que** le dispositif d'actionnement (15) comprend un dispositif d'ameublissement pour le produit en vrac, par exemple un vibrateur (11).

10. Procédé de fonctionnement d'un dispositif de déchargement selon une quelconque des revendications précédentes, **caractérisé en ce qu'**une gestion en séquence est effectuée à ce sens, qu'après une commande du dispositif d'actionnement primaire (13') en direction d'un abaissement de l'organe obturateur (31) de manière, que celui-ci fermerait déjà, mais une fente reste ouverte, le dispositif d'actionnement précis (15", 29) est commandé à fermer complètement l'organe obturateur (31).
